# FASCICULE DE BREVET EUROPEEN

(11) **EP 3 152 593 B1**
(45) Date de publication et mention de la délivrance du brevet: **22.07.2020**
(21) Numéro de dépôt: 15727962.1
(22) Date de dépôt: 05.06.2015
(51) Int. Cl.: G01S 17/46, G01S 17/93, G01B 11/25, G05D 1/02

(54) **DISPOSITIF DE DETECTION A PLANS CROISES D'UN OBSTACLE ET PROCEDE DE DETECTION METTANT EN OEUVRE UN TEL DISPOSITIF**
VORRICHTUNG ZUM ERKENNEN EINES HINDERNISSES MITTELS SICH SCHNEIDENDER EBENEN UND ERKENNUNGSVERFAHREN MIT SOLCH EINER VORRICHTUNG
DEVICE FOR DETECTING AN OBSTACLE BY MEANS OF INTERSECTING PLANES AND DETECTION METHOD USING SUCH A DEVICE

(30) Priorité: 05.06.2014 FR 1455098
(43) Date de publication de la demande: 12.04.2017
(73) Titulaire: Softbank Robotics Europe, 75015 Paris (FR)
(72) Inventeur: MAISONNIER, Bruno, 75014 Paris (FR); ZIEGLER, Jörg, 75015 Paris (FR); CLERC, Vincent, 92140 Clamart (FR); GARCIA, Nicolas, 75015 Paris (FR)
(74) Mandataire: Collet, Alain
(86) Numéro de dépôt international: PCT/EP2015/062622
(87) Numéro de publication internationale: WO 2015/185749

(56) Documents cités:
- DE-A1-102008 014 912
- JP-A- 2008 039 745
- US-A- 5 040 116
- US-A1- 2002 091 466
- US-A1- 2004 066 500
- US-A1- 2006 182 365
- US-A1- 2007 135 966
- US-A1- 2009 125 175
- US-A1- 2013 204 483
- US-A1- 2014 129 027

## Description

L'invention concerne un dispositif de détection d'obstacles disposé sur un véhicule mobile et s'applique notamment au domaine de la navigation. L'invention concerne également un procédé de détection d'obstacles mettant en œuvre un tel dispositif.

Lors d'un déplacement d'un véhicule mobile tel un robot, il est souhaitable d'éviter toute collision entre le véhicule mobile et un obstacle situé dans l'environnement dans lequel le véhicule mobile se déplace, par exemple pour ne pas endommager le véhicule mobile et/ou l'obstacle.

Pour tout véhicule mobile, et donc aussi pour un robot apte à se mouvoir, il est très important de prendre en compte la sécurité du véhicule mobile et des éléments de son environnement. La sécurité du véhicule et des éléments de son environnement passe notamment par la détection d'obstacles dans l'environnement et l'évitement de collision avec ces obstacles. Il existe différentes techniques permettant d'éviter les collisions. La plupart de ces techniques implique des coûts d'implémentation importants et nécessitent une puissance de calcul significative pour, par exemple, déterminer la position du robot dans un certain référentiel. D'autres techniques existantes sont très coûteuses, et ne sont donc pas adaptées pour une mise en œuvre dans un robot.

Le document US 2013/204483 décrit un robot de nettoyage mobile comprenant deux émetteurs de lumière destinés à émettre chacun une région d'irradiation sur un obstacle, et un capteur d'image pour faire une image 3D de l'obstacle ainsi éclairé. Il est aussi connu les demandes de brevet US 2002/0091466 et US 2006/0182365.

L'invention vise à pallier tout ou partie des problèmes cités plus haut en proposant un dispositif de détection d'obstacles situé dans l'environnement d'un véhicule mobile, ainsi qu'un procédé mettant en œuvre un tel dispositif.

A cet effet, l'invention a pour objet un dispositif de détection d'obstacles destiné à équiper un véhicule mobile parallèlement à un plan de référence, le véhicule ayant un sens de déplacement privilégié dans un premier sens selon un axe X, caractérisé en ce qu'il comprend :
- au moins deux émetteurs de faisceau électromagnétique aptes à former deux plans virtuels dans deux directions différentes pouvant s'intersecter entre eux et avec un éventuel obstacle,
- au moins un capteur d'image apte à produire une image bidimensionnelle de l'intersection des plans virtuels et de l'éventuel obstacle,
- un moyen d'analyse d'image apte à déterminer la présence d'un obstacle, configuré pour comparer l'image bidimensionnelle avec une image de référence,
- un premier émetteur dit oblique d'un premier faisceau oblique s'étendant dans un premier plan virtuel oblique dans le premier sens selon l'axe X et sécant au plan de référence, et un second émetteur dit oblique d'un second faisceau oblique s'étendant dans un second plan virtuel oblique dans le premier sens selon l'axe X et sécant au plan de référence. Le dispositif comprend aussi un premier capteur d'image apte à produire une image autour de l'intersection des premier et second plans virtuels obliques avec le plan de référence.

Le dispositif comprend :
- un émetteur dit pelle d'un faisceau pelle s'étendant dans un plan virtuel configuré pour s'intersecter avec le plan de référence selon une droite perpendiculaire à l'axe X,
- un moyen d'analyse d'image,
le premier capteur d'image étant apte à produire une image de la droite, et le moyen d'analyse d'image étant apte à déterminer la présence d'un obstacle par détection d'une déformation de la droite.

Selon un mode de réalisation de l'invention, le dispositif comprend un premier émetteur dit horizontal d'un premier faisceau horizontal s'étendant dans un premier plan virtuel sensiblement parallèle au plan de référence et le premier capteur d'image est apte à produire une image de l'intersection du premier plan virtuel et de l'obstacle.

Selon un autre mode de réalisation, le premier plan virtuel forme un secteur angulaire autour de l'axe X, et le dispositif comprend en outre un deuxième émetteur dit horizontal d'un deuxième faisceau horizontal s'étendant dans un deuxième plan virtuel dans un premier sens, formant un secteur angulaire autour d'un axe Y perpendiculaire à l'axe X et sensiblement parallèle au plan de référence. Le dispositif comprend un deuxième capteur d'image apte à produire une image de l'intersection du deuxième plan virtuel et de l'obstacle. Le dispositif comprend un troisième émetteur dit horizontal d'un troisième faisceau horizontal s'étendant dans un troisième plan virtuel dans un deuxième sens, opposé au premier sens, formant un secteur angulaire autour de l'axe Y et sensiblement parallèle au plan de référence, un troisième capteur d'image apte à produire une image de l'intersection du troisième plan virtuel et de l'obstacle.

Avantageusement, le secteur angulaire formé par le premier faisceau horizontal est espacé des secteurs angulaires formés par les deuxième et troisième faisceaux horizontaux d'un angle prédéfini.

Avantageusement, le secteur angulaire est de 120°.

Selon un autre mode de réalisation, le dispositif comprend en outre des moyens de positionnement d'un plan virtuel dit horizontal destinés à positionner ledit plan virtuel dit horizontal de manière à ce qu'il n'intersecte pas le plan de référence.

Les moyens de positionnement peuvent être constitués par une boucle d'asservissement apte à déterminer une position angulaire du plan virtuel dit horizontal par rapport au plan de référence et à transmettre une nouvelle position angulaire à l'émetteur dit horizontal formant le plan virtuel dit horizontal.

Les moyens de positionnement peuvent aussi être constitués par un angle positif entre le plan virtuel dit horizontal et le plan de référence.

Avantageusement, le ou les faisceaux sont des faisceaux laser.

Avantageusement, le dispositif comprend des moyens de commande configurés pour désactiver sélectivement des émetteurs et des capteurs en fonction du sens de déplacement du véhicule.

Avantageusement, le dispositif comprend en outre un circuit de traitement configuré pour cadencer les émissions de faisceaux par les émetteurs et synchroniser les émissions de faisceaux avec les prises de vue par les capteurs.

L'invention a aussi pour objet un véhicule mettant en œuvre un tel dispositif.

L'invention a aussi pour objet un procédé de détection d'obstacles mettant en œuvre un tel dispositif, caractérisé en ce qu'il comporte les étapes suivantes :
- Emission d'un faisceau apte à former un plan virtuel pouvant s'intersecter avec l'obstacle,
- Prise de vues et production d'une image de l'intersection du plan virtuel et de l'obstacle,
- Analyse de l'image et détermination de l'obstacle.

Le procédé selon l'invention peut aussi comporter les étapes suivantes :
- mémorisation d'une première image de l'intersection du plan virtuel formé par le faisceau pelle avec le plan de référence,
- mémorisation d'une seconde image de l'intersection du plan virtuel formé par le faisceau pelle avec l'obstacle,
- comparaison de la première et la seconde images de manière à définir la localisation de l'obstacle.

Le véhicule mobile est par exemple un robot. Ce robot peut disposer de roues pour permettre son déplacement sur un plan de référence. L'invention s'applique également à un robot à caractère humanoïde se déplaçant au moyen de jambes.

Alternativement, le véhicule mobile peut être tout type de véhicule, se déplaçant parallèlement à un plan de référence, soit en contact avec le plan de référence par l'intermédiaire de roues, soit sur coussins d'air.

L'invention a également pour objet un robot à caractère humanoïde comprenant un dispositif de détection selon l'invention.

On entend par robot à caractère humanoïde, un robot présentant des similitudes avec le corps humain. Il peut s'agir du haut du corps, ou uniquement d'un bras articulé se terminant par une pince assimilable à une main humaine. Dans la présente invention, le haut du corps du robot est similaire à celui d'un tronc humain. Un dispositif de détection conforme à l'invention permet de déterminer des obstacles dans l'environnement du robot.

L'invention sera mieux comprise et d'autres avantages apparaîtront à la lecture de la description détaillée d'un mode de réalisation donné à titre d'exemple, description illustrée par le dessin joint dans lequel :
- la figure 1 représente des plans virtuels formés par deux faisceaux,
- la figure 2a représente une vue de dessus d'un dispositif selon l'invention montrant des plans virtuels des faisceaux parallèles au plan de référence,
- la figure 2b représente une vue en coupe d'un dispositif selon l'invention montrant un plan virtuel d'un faisceau sensiblement parallèle au plan de référence,
- la figure 2c représente une boucle d'asservissement permettant d'ajuster une position angulaire d'un plan virtuel par rapport au plan de référence,
- la figure 3 représente un plan virtuel formé par un faisceau, et des plans virtuels formés par deux faisceaux,
- les figures 4a, 4b, 4c représentent une intersection d'un plan virtuel avec un obstacle selon l'invention,
- la figure 5 représente des plans virtuels formés par des faisceaux ainsi qu'un champ couvert par un appareil de prise de vues,
- la figure 6 représente un émetteur de faisceau apte à former un plan virtuel,
- la figure 7 représente un robot à caractère humanoïde mettant en œuvre un dispositif de détection d'obstacles selon l'invention,
- la figure 8 représente un exemple d'un socle comprenant des roues pour un robot à caractère humanoïde mettant en œuvre un dispositif de détection d'obstacles selon l'invention,
- la figure 9 représente schématiquement un processeur assurant les fonctions de traitement et de synchronisation des émissions de faisceaux et des prises de vue,
- la figure 10 illustre schématiquement les étapes d'un procédé de détection d'obstacles selon l'invention,
- les figures 11a et 11b représentent deux configurations de détection d'obstacles,
- la figure 12 illustre schématiquement une vue de profil d'un dispositif selon l'invention montrant des plans virtuels horizontaux, oblique et pelle,
- Les figures 13a, 13b, 14a et 14b représentent une image obtenue par intersection d'un plan virtuel avec le plan de référence avec et sans obstacle.

Par souci de clarté, les mêmes éléments porteront les mêmes repères dans les différentes figures.

Dans la description, l'invention est décrite avec l'exemple d'une mise en œuvre sur un robot, et plus particulièrement sur un robot se déplaçant au moyen de roues. Cependant, l'invention est applicable à tout véhicule mobile. Un véhicule mobile 11 a un sens de déplacement privilégié dans un premier sens selon un axe X.

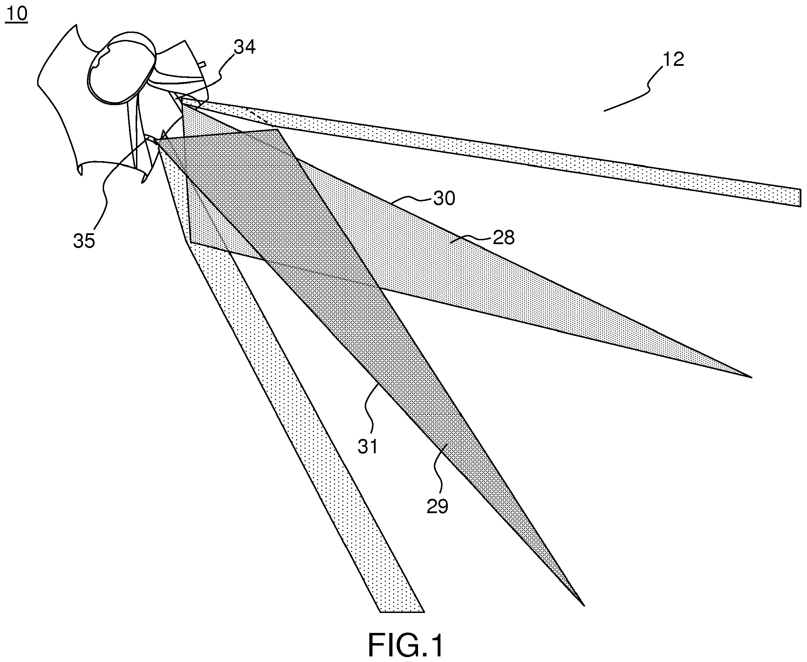

La figure 1 représente une vue du dispositif 10 selon l'invention. Le dispositif 10 de détection d'obstacles destiné à équiper le véhicule mobile 11 parallèlement à un plan de référence 12 comprend au moins deux émetteurs 34, 35 de faisceau électromagnétique aptes à former deux plans virtuels dans deux directions différentes pouvant s'intersecter avec un éventuel obstacle, au moins un capteur d'image 5 (non représenté sur la figure 1) apte à produire une image de l'intersection des plans virtuels et de l'obstacle, un moyen d'analyse d'image 66 (non représenté sur la figure 1) apte à déterminer l'obstacle, configuré pour comparer l'image avec une image de référence. Autrement dit, les plans virtuels formés intersectent le plan de référence 12 et forment ainsi une ligne droite. En présence d'un obstacle, la ligne est alors déformée, et c'est la déformation de la ligne qui révèle la présence d'un obstacle. Ainsi, on projette un plan virtuel, on regarde l'image obtenue et la détection d'un obstacle est obtenue par la déformation de la ligne d'intersection entre le plan virtuel et l'obstacle.

La figure 1 représente des plans virtuels 28, 29 formés par des émetteurs dit obliques 34, 35. Le dispositif 10 comprend un premier émetteur dit oblique 34 d'un premier faisceau oblique 30 s'étendant dans un premier plan virtuel oblique 28 dans le premier sens selon l'axe X et sécant au plan de référence 12. Le dispositif 10 comprend un second émetteur dit oblique 35 d'un second faisceau oblique 31 s'étendant dans un second plan virtuel oblique 29 dans le premier sens selon l'axe X et sécant au plan de référence 12. Le premier capteur d'image 5 est apte à produire une image autour de l'intersection des plans virtuels obliques 28, 29 avec le plan de référence 12.

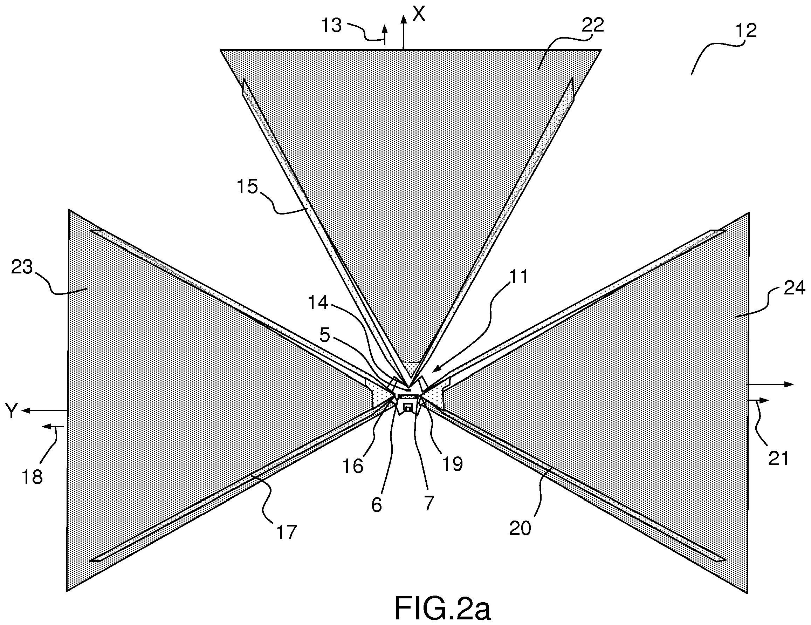

La figure 2a une vue de dessus d'un dispositif selon l'invention montrant des plans virtuels des faisceaux parallèles au plan de référence 12.

Le dispositif 10 comprend un premier émetteur dit horizontal 14 d'un premier faisceau horizontal 15 s'étendant dans un premier plan virtuel 22 sensiblement parallèle au plan de référence 12 et le premier capteur d'image 5 apte à produire une image de l'intersection du premier plan virtuel 22 et de l'obstacle.

Le véhicule mobile 11 ayant un sens de déplacement privilégié dans le premier sens selon l'axe X, le premier plan virtuel 22 forme un secteur angulaire autour de l'axe X, et le dispositif 10 comprend en outre un deuxième émetteur dit horizontal 16 d'un deuxième faisceau horizontal 17 s'étendant dans un deuxième plan virtuel 23 dans un premier sens, formant un secteur angulaire autour d'un axe Y perpendiculaire à l'axe X et sensiblement parallèle au plan de référence 12. Le dispositif 10 comprend un deuxième capteur d'image 6 apte à produire une image de l'intersection du deuxième plan virtuel 23 et de l'obstacle. Le dispositif comprend un troisième émetteur dit horizontal 19 d'un troisième faisceau horizontal 20 s'étendant dans un troisième plan virtuel 24 dans un deuxième sens, opposé au premier sens, formant un secteur angulaire autour de l'axe Y et sensiblement parallèle au plan de référence 12. Le dispositif 10 comprend un troisième capteur d'image 7 apte à produire une image de l'intersection du troisième plan virtuel 23 et de l'obstacle.

De manière avantageuse, le secteur angulaire 22 formé par le premier faisceau horizontal 15 est espacé des secteurs angulaires 23, 24 formés par les deuxième et troisième faisceaux horizontaux 17, 20 d'un angle prédéfini.

Le secteur angulaire peut être de 60° et l'angle prédéfini de 30°. On peut aussi avoir un secteur angulaire de 90°. Avantageusement, le secteur angulaire est de 120° et l'angle prédéfini est de 0°. Cette configuration permet une couverture totale de l'environnement autour du véhicule mobile 11.

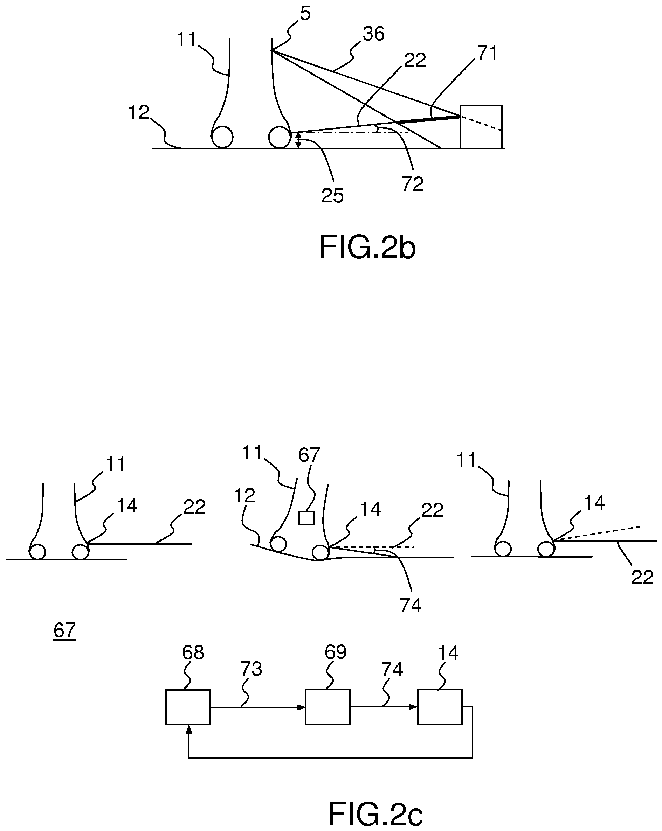

Les premier, deuxième et troisième émetteurs dit horizontaux 14, 16, 19 sont positionnés sur le véhicule mobile 11 à une certaine hauteur 25 du plan de référence 12 (visible sur la figure 2b). La hauteur 25 peut être par exemple de 15 cm, ou 10 cm. Afin de détecter de petits obstacles, la hauteur 25 peut être de 5 ou 3 cm. Les plans virtuels 22, 23, 24 formés respectivement par les émetteurs 14, 16, 19 peuvent s'intersecter avec un obstacle situé à une hauteur supérieure à la hauteur 25, ou avec un obstacle dont une partie se situe au niveau des plans virtuels 22, 23 ou 24. Les émetteurs 14, 16, 19 permettent une détection d'obstacle que l'on peut qualifier de détection panoramique.

Le capteur d'image 5 peut également être un capteur d'image dit « grand angle » permettant à lui seul une prise de vue des trois plans virtuels 22, 23, 24.

La figure 2b représente une vue en coupe d'un dispositif selon l'invention montrant le plan virtuel 22 du faisceau 15 sensiblement parallèle au plan de référence 12. Nous décrivons ici le plan virtuel 22, mais tout ceci est également valable pour les plans virtuels 23 et 24.

Avantageusement, le dispositif de détection selon l'invention comprend des moyens 67 pour que le plan virtuel 22 soit toujours au dessus du plan de référence 12 dans un champ 36 couvert par le capteur d'image 5.

Les moyens 67 pour que le plan virtuel 22 soit toujours au dessus du plan de référence 12 dans un champ 36 peuvent être constitués par une boucle d'asservissement qui permet d'orienter l'émetteur 14 de faisceau 15 de manière à orienter le plan virtuel 22 en fonction de son orientation lorsque le véhicule mobile 11 est en mouvement. Ainsi, si le véhicule mobile 11 se déplace sur un plan de référence comprenant des irrégularités, comme représenté sur la figure 2c, le plan virtuel 22 peut être amené à intersecter le plan de référence 12. Un gyroscope 68 peut capter une position angulaire 73 du plan virtuel 22 par rapport au plan de référence 12. Un moyen d'analyse 69 dans la boucle d'asservissement prend connaissance de cette information, transmet une nouvelle position angulaire 74 à l'émetteur 14 qui est alors orienté de manière à positionner le plan virtuel 22 au dessus du plan de référence 12. Quand le véhicule mobile 11 est de nouveau en déplacement sur une surface complètement plane, le moyen d'analyse 69 transmet à l'émetteur 14 une nouvelle position angulaire de manière à ce que le plan virtuel 22 se repositionne sensiblement parallèlement au plan de référence 12.

Selon une autre configuration, les moyens de positionnement sont constitués par un angle 72 entre le plan virtuel dit horizontal 22 et le plan de référence 12. Le plan virtuel 22 peut donc être légèrement orienté vers le haut. Autrement dit, il forme l'angle 72, angle positif, avec le plan de référence 12. Ainsi, le plan virtuel 22 n'intersecte jamais le plan de référence 12, même lorsque le véhicule mobile 11 est en mouvement. Le capteur d'image 5 est apte à produire une image de l'intersection du plan virtuel 22 et d'un éventuel obstacle.

On peut ainsi définir une surface 71 de détection qui correspond à l'intersection du plan virtuel 22 et du cône formé par le champ 36 couvert par le capteur d'image 5. Le plan virtuel 22 seul peut s'intersecter avec un éventuel obstacle ayant approximativement une hauteur supérieure ou égale à la hauteur 25 et pouvant être situé à l'infini. Du fait de l'angle positif 72 et du champ 36 du capteur d'image 5, la surface 71 de détection est située à proximité du véhicule mobile 11. Détecter un éventuel obstacle revient donc à détecter une apparition d'une image au niveau de la surface 71 de détection.

Les faisceaux obliques 30, 31 peuvent s'intersecter avec de petits obstacles, des trous, ou des obstacles de plus grande taille, avec lesquels les faisceaux horizontaux 15, 17, 20 n'auraient éventuellement pas pu s'intersecter.

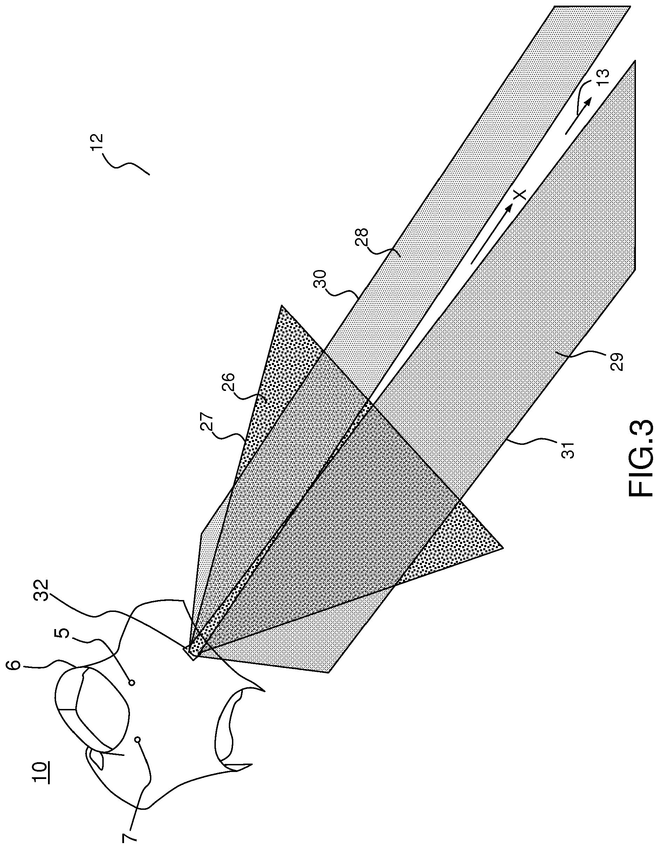

La figure 3 représente un plan virtuel 26 formé par un faisceau pelle 27 émis par un émetteur dit pelle 32. Le dispositif 10 comprend l'émetteur dit pelle 32 d'un faisceau pelle 27 s'étendant dans un plan virtuel 26 configuré pour s'intersecter avec le plan de référence 12 selon une droite perpendiculaire à l'axe X. Le premier capteur d'image 5 est apte à produire une image de la droite résultant de l'intersection du plan virtuel 26 et du plan de référence 12. Le plan virtuel 26 formé par l'émetteur 32 peut s'intersecter avec un obstacle situé à une hauteur correspondant à la distance 33 entre le plan virtuel 26 et le plan de référence 12. Il peut s'agir d'un obstacle posé sur le plan de référence 12 de grande taille ou de petite taille. Il trouve une application particulièrement intéressante pour les obstacles dont la hauteur est inférieure à la hauteur 25 séparant le plan de référence 12 à un plan virtuel horizontal. On peut notamment citer comme exemple d'obstacles un trou ou un butoir de porte.

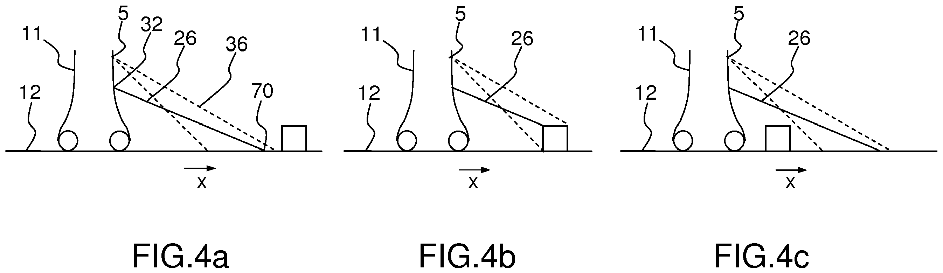

Les figures 4a, 4b et 4c représentent une intersection du plan virtuel 26 avec un obstacle selon l'invention. Le véhicule 11 est mobile parallèlement au plan de référence 12. L'émetteur pelle 32 du faisceau pelle 27 s'étend dans le plan virtuel 26. Le plan virtuel 26 est configuré pour s'intersecter avec le plan de référence 12 selon une droite 70 perpendiculaire à l'axe X, comme représenté sur la figure 4a.

Autrement dit, le plan virtuel 26 formé par le faisceau pelle 27 permet d'effectuer un scan du plan de référence 12. Le capteur d'image 5 est apte à produire une image de la droite 70. Un moyen d'analyse d'image est apte à déterminer la présence de l'obstacle, le moyen d'analyse étant configuré pour comparer l'image du capteur 5 avec une image de référence. Il s'agit donc d'effectuer une projection d'une ligne sur le plan de référence 12 dans le champ 36 du capteur d'image 5. L'utilisation du plan virtuel 26 en instantané permet de détecter, en présence d'un obstacle, une déformation de la ligne 70. Par ailleurs, il est possible de mémoriser tout ce qui se trouve dans le volume entre le plan virtuel 26 et le plan de référence 12. Ainsi, avec une utilisation couplée au temps (c'est-à-dire aux positions successives du véhicule mobile 11) et à la mémorisation, on sait quand on a un obstacle dans l'environnement du véhicule mobile 11. Autrement dit, il est possible de mémoriser une première image et une seconde image à différents instants de l'intersection du plan virtuel 26 formé par le faisceau pelle 27 avec le plan de référence 12. On procède à une comparaison de la première et la seconde images de manière à définir la localisation de l'obstacle. La localisation de l'obstacle peut se faire dans un repère fixe ou dans un repère lié au véhicule mobile 11. Cette détection et localisation de l'obstacle peut se faire quand le véhicule mobile se déplace dans le premier sens selon l'axe X, mais aussi dans le sens inverse du premier sens (c'est-à-dire en marche avant ou en marche arrière). Il est alors possible de ralentir le véhicule mobile 11, de l'arrêter avant une collision avec l'obstacle ou le faire dévier de sa trajectoire. Enfin, dans le cas extrême d'une disparition de la droite 70, cela signifie que le véhicule mobile 11 se trouve à proximité d'une falaise ou d'une marche d'escaliers puisque le capteur d'image 5 n'est plus apte à produire une image de la ligne 70 alors en contrebas par rapport au plan de référence 12. Inversement, dès que le capteur d'image 5 est apte à produire une image, c'est-à-dire une cassure du plan virtuel 26, cela signifie soit que le véhicule mobile 11 peut avancer et reculer sur le plan de référence 12, sans risque de tomber dans le vide (falaise, escaliers, ...), soit que le véhicule mobile 11 est en présence d'un obstacle à proximité.

Il est à noter que le faisceau pelle peut être utilisé seul, indépendamment des autres faisceaux obliques et horizontaux. De même, il est tout à fait possible de n'utiliser que les faisceaux obliques. Enfin, il est possible d'utiliser plusieurs faisceaux ensemble, par exemple un faisceau pelle avec un faisceau horizontal, un faisceau pelle avec un faisceau oblique, un faisceau oblique avec un faisceau horizontal ou tout autre combinaison de 2 ou plusieurs faisceaux.

Ainsi, les six faisceaux 15, 17, 20, 27, 30, 31 permettent au dispositif 10 de former une intersection avec des plans virtuels et tout obstacle se situant dans un environnement proche.

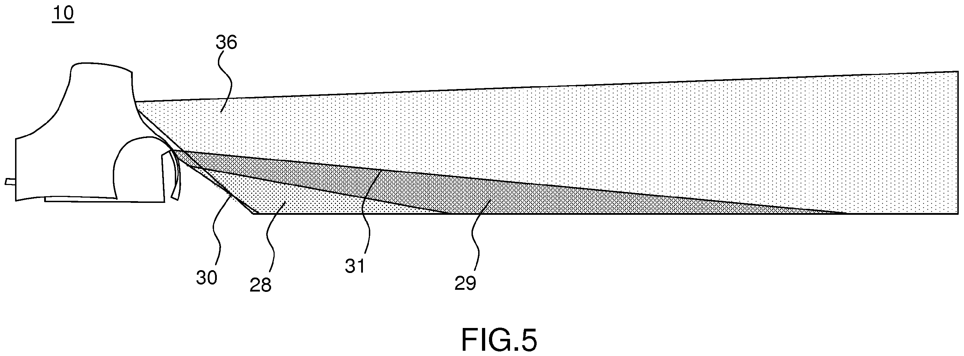

La figure 5 représente sur une vue latérale les plans virtuels 28, 29 formés par les faisceaux obliques 30, 31 ainsi que le champ 36 couvert par le capteur d'image 5. Les plans virtuels 28, 29 formés respectivement par les faisceaux 30, 31 peuvent s'intersecter avec un obstacle. Le capteur d'image 5 peut alors produire une image de l'intersection du ou des plans virtuels 28, 29 avec l'obstacle. Un moyen d'analyse d'image (non représenté sur la figure) est alors apte à déterminer l'obstacle, configuré pour comparer l'image obtenue avec une image de référence.

Plus précisément, les plans virtuels 26, 28, 29 intersectent le plan de référence 12 (qui correspond dans la plupart des cas au sol sur lequel le véhicule mobile 11 se déplace) et forment ainsi une ligne droite. En présence d'un obstacle, la ligne ainsi formée est perturbée, et c'est la perturbation de la ligne qui révèle la présence d'un obstacle.

Il est important de noter que le capteur d'image 5, une caméra par exemple, est avantageusement synchronisé avec les émetteurs de faisceaux, permettant aux émetteurs de faisceaux de n'être actifs que pendant le temps d'exposition du capteur d'image 5. Il faut également prendre en compte le décalage entre l'instant de la prise de décision de l'exposition (par exemple de la part d'un processeur PROC disposé dans le véhicule mobile 11) et l'instant où le capteur d'image prend effectivement l'image.

Il est aussi particulièrement avantageux de cadencer tous les appareils émettant les faisceaux entre eux par le biais d'une impulsion commune. Cette synchronisation permet d'éviter des interférences entre différents faisceaux, et qui apporteraient de mauvaises informations à l'appareil de prise de vues et d'analyse d'image.

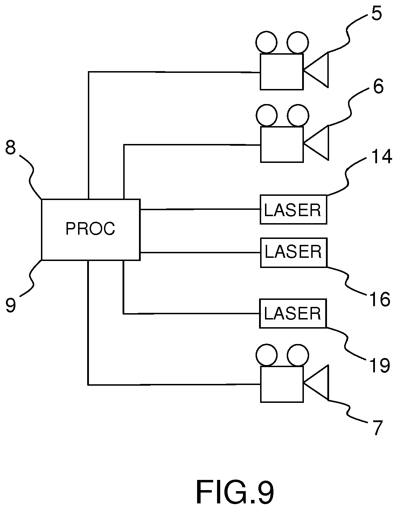

Pour ce faire, comme représenté sur la figure 9, le dispositif 10 comprend des moyens de commande 8 configurés pour désactiver sélectivement des émetteurs et des capteurs en fonction du sens de déplacement du véhicule 11. Cela permet de réduire la consommation énergétique du dispositif 10
Le dispositif 10 comprend en outre un circuit de traitement 9 configuré pour cadencer les émissions de faisceaux par les émetteurs et synchroniser les émissions de faisceaux avec les prises de vue par les capteurs. Ainsi, les faisceaux sont émis l'un après l'autre ou simultanément selon la configuration dans laquelle se trouve le véhicule mobile 11. Et à chaque émission de faisceau, le capteur d'image associé effectue une prise de vue. Par exemple, pour obtenir une vision panoramique de l'environnement du véhicule mobile 11, les trois faisceaux horizontaux 15, 17, 20 sont émis simultanément et les trois capteurs d'image 5, 6, 7 produisent chacun une image. Si on souhaite une vision de la direction privilégiée de déplacement selon l'axe X, le premier faisceau horizontal peut être émis avant le faisceau dit pelle, et le capteur d'image 5 correspondant est activé de manière cadencée en faisant une première prise de vue en même temps que l'émission du faisceau horizontal, puis une seconde prise de vue en même temps que l'émission du faisceau dit pelle.

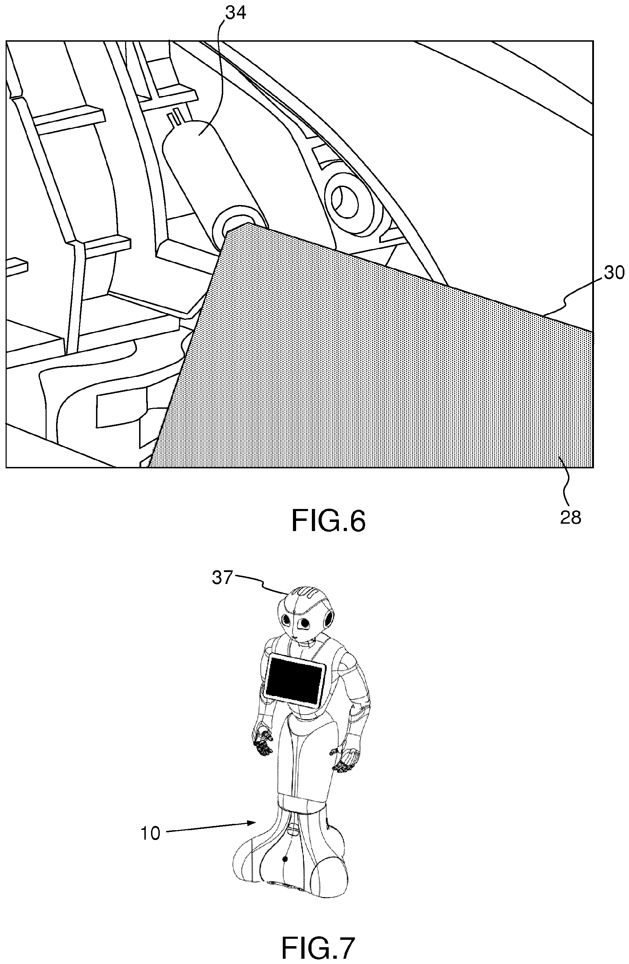

La figure 6 représente l'émetteur 34 émettant le faisceau 30 apte à former le plan virtuel 28. Avantageusement, les émetteurs de faisceaux sont fixés sur le véhicule mobile 11 afin d'éviter d'avoir des pièces mobiles dans et/ou sur le véhicule mobile 11. La fixation des émetteurs de faisceaux offre ainsi une bonne robustesse pendant le transport du véhicule mobile 11 et contre les vibrations d'une pièce en mouvement.

Avantageusement, le ou les faisceaux sont des faisceaux laser.

Le dispositif 10 selon l'invention peut également disposer d'un moyen de contrôle de l'exposition qui peut consister en un algorithme d'amélioration de contraste entre la lumière du faisceau émis et l'environnement. Un tel moyen de contrôle peut notamment permettre au dispositif 10 de ne considérer qu'une zone dite zone de sécurité dans un environnement proche du véhicule mobile 11. La précision dans la détermination de l'obstacle en est ainsi améliorée.

Une pièce ne pouvant être réalisée avec une géométrie et des dimensions rigoureusement exactes, et afin que la pièce puisse remplir ses fonctions dans un mécanisme, des tolérances (dimensionnelles, géométriques) sont définies. Ces tolérances peuvent avoir un impact sur la précision de mesures. Le dispositif 10 peut disposer d'un mécanisme de calibration de l'angle d'inclinaison du capteur d'image 5 et de l'angle d'inclinaison des émetteurs 14, 16, 19 des faisceaux 15, 17, 20. Un tel mécanisme de calibration est généralement mis en œuvre dans un environnement connu et assure une bonne précision de mesures et donc de détermination de l'obstacle.

La figure 7 représente un robot 37 à caractère humanoïde mettant en œuvre le dispositif 10 de détection d'obstacles selon l'invention.

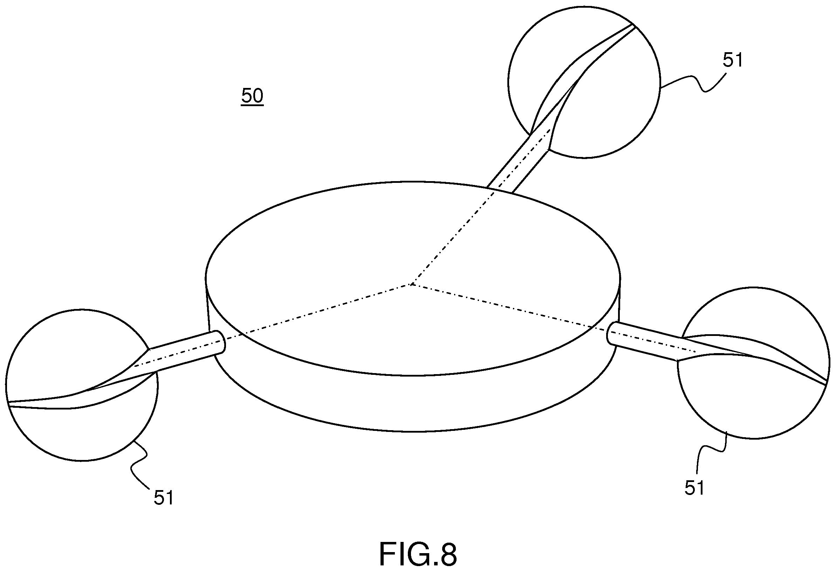

La figure 8 représente un exemple d'un socle 50 comprenant des roues 51 pour un robot à caractère humanoïde mettant en œuvre le dispositif de détection d'obstacles selon l'invention.

La figure 9 représente schématiquement un processeur PROC assurant les fonctions de traitement et de synchronisation des émissions de faisceaux et des prises de vue.

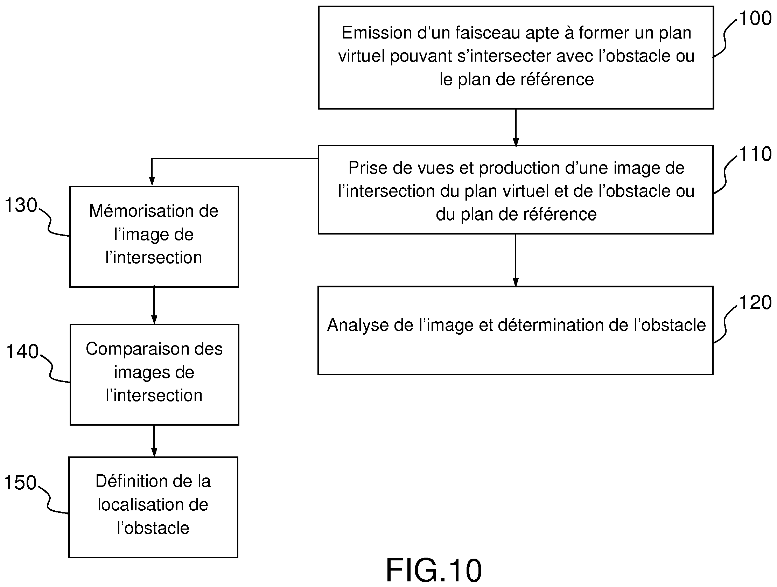

La figure 10 illustre schématiquement les étapes d'un procédé de détection d'obstacles selon l'invention. Le procédé de détection met en œuvre le dispositif de détection tel que décrit précédemment. Il comporte les étapes suivantes :
- Emission d'un faisceau apte à former un plan virtuel pouvant s'intersecter avec l'obstacle (étape 100),
- Prise de vues et production d'une image de l'intersection du plan virtuel et de l'obstacle (étape 110),
- Analyse de l'image et détermination de l'obstacle (étape 120).

Le procédé comporte en outre les étapes suivantes :
- mémorisation d'une première image de l'intersection du plan virtuel (26) formé par le faisceau pelle (27) avec le plan de référence (12) (étape 130),
- mémorisation d'une seconde image de l'intersection du plan virtuel (26) formé par le faisceau pelle (27) avec l'obstacle (étape 130),
- comparaison de la première et la seconde images (étape 140) de manière à définir la localisation de l'obstacle (étape 150).

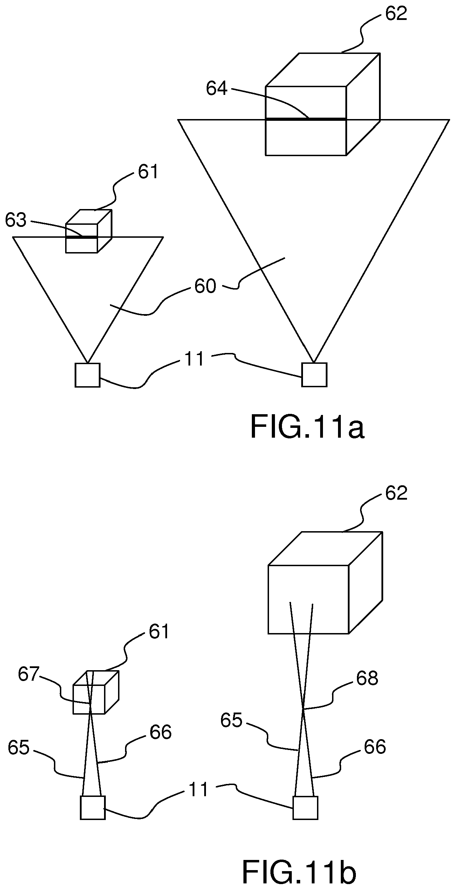

Les figures 11a et 11b représentent deux configurations de détection d'obstacles. Dans la figure 11a, un seul plan virtuel 60 s'intersecte avec un obstacle. Dans la figure 11b, deux plans virtuels 65, 66 s'intersectent entre eux et avec un obstacle avec un dispositif de détection selon l'invention. Dans les deux configurations sont présents deux obstacles similaires 61, 62 (deux cubes dans l'exemple représenté) : l'un 61 est petit et proche du véhicule mobile 11, le second 62 est grand et plus éloigné du véhicule mobile 11. Dans la figure 11a, le plan virtuel 60 s'intersecte avec le petit cube 61. De même, le plan virtuel 60 s'intersecte avec le grand cube 62. Une intersection 63 entre le plan virtuel 60 et le petit cube 61 et une intersection 64 entre le plan virtuel 60 et le grand cube 62 forment chacune une ligne. Néanmoins, du fait de la différence de taille des deux cubes 61, 62 et de l'éloignement du grand cube 62 comparé au petit cube 61 par rapport au véhicule mobile 11, les deux lignes d'intersection 63, 64 sont perçues identiques par le capteur d'image. Dans la figure 11b, deux plans virtuels 65, 66 s'intersectent entre eux et avec d'une part le petit cube 61 proche du véhicule mobile 11 pour former une ligne d'intersection 67. Les deux plans virtuels 65, 66 s'intersectent aussi entre eux mais pas sur le grand cube 62, trop éloigné pour que l'intersection 68 entre les deux plans virtuels 65, 66 coïncident avec une intersection avec le grand cube 62. Ainsi, la détection d'obstacle avec deux plans virtuels dans des directions différentes et s'intersectant entre eux permet de déterminer plus précisément un obstacle.

Après la détermination de l'obstacle (étape 120), il est possible que le véhicule mobile 11 fasse une nouvelle action. On peut citer par exemple une action de navigation avec un changement de trajectoire ou un arrêt. Le dispositif 10 selon l'invention peut aussi disposer d'une bibliothèque d'images de référence. Ces images de référence correspondent à des images prédéfinies permettant, en plus de la détection d'obstacles, la reconnaissance des obstacles par comparaison de l'image produite par le capteur d'images 5 avec les images de référence. L'analyse d'image ainsi effectuée peut notamment permettre au véhicule mobile 11 de reconnaître sa base de rechargement et de s'y diriger pour effectuer la recharge de sa batterie.

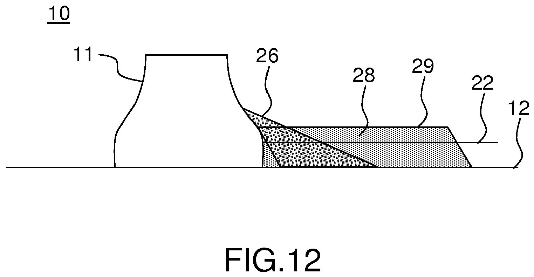

La figure 12 illustre schématiquement une vue de profil du dispositif 10 selon l'invention montrant les plans virtuels horizontaux (seul le plan 22 est représenté), oblique 28, 29 et pelle 26.

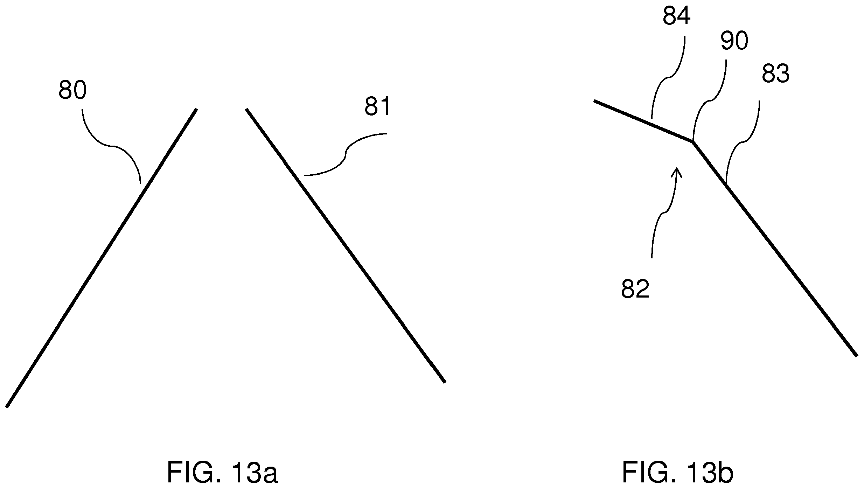

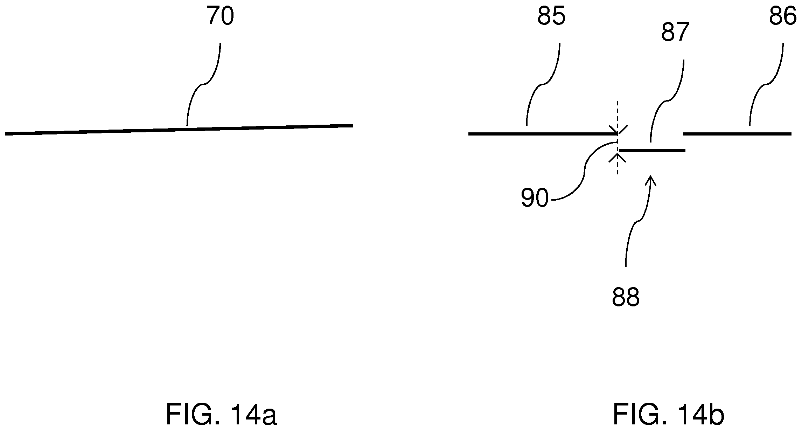

Les figures 13a, 13b, 14a et 14b représentent une image obtenue par intersection d'un plan virtuel avec le plan de référence avec et sans obstacle. Comme expliqué précédemment, les plans virtuels formés intersectent le plan de référence 12 et forment ainsi une ligne droite. En présence d'un obstacle, la ligne est alors déformée, et c'est la déformation de la ligne qui révèle la présence d'un obstacle. Ainsi, on projette un plan virtuel, on regarde l'image obtenue et la détection d'un obstacle est obtenue par la déformation de la ligne d'intersection entre le plan virtuel et l'obstacle.

La figure 13a représente l'image obtenue par intersection des plans virtuels obliques 28, 29 avec le plan de référence 12. Il n'y a pas d'obstacle. L'image obtenue est donc la représentation de deux lignes droites 80 et 81. La figure 13b représente l'image obtenue par intersection du plan virtuel oblique 29 avec le plan de référence 12 en présence d'un obstacle tel qu'un mur. L'image obtenue est donc la représentation d'une ligne brisée 82, c'est-à-dire dont la continuité est interrompue au niveau de la projection du plan virtuel 29 sur le mur. La ligne brisée 82 comprend donc deux partie : la partie 83 qui correspond à l'intersection du plan virtuel 29 avec le plan de référence 12 et la partie 84 qui correspond à l'intersection du plan virtuel 29 avec le mur qui forme obstacle. Ainsi, la déformation de la ligne 82 révèle la présence du mur. Le moyen d'analyse d'image 66, en comparant l'image comprenant la ligne 82 avec l'image de référence comprenant la ligne 81, est alors apte à déterminer l'obstacle constitué par le mur. Le point 90 situé à l'intersection des parties 83 et 84 de la ligne brisée 82 donne ainsi la distance entre l'émetteur et l'obstacle.

La figure 14a représente l'image obtenue par intersection du plan virtuel 26 avec le plan de référence 12, correspondant à la configuration présentée à la figure 4a. Comme expliqué précédemment, le plan virtuel 26 est configuré pour s'intersecter avec le plan de référence 12 selon la droite 70 perpendiculaire à l'axe X, comme représenté sur la figure 4a. Le capteur d'image 5 est apte à produire une image de la droite 70. Comme il n'y a pas d'obstacle, la ligne 70 est une ligne droite.

La figure 14b représente l'image obtenue par intersection du plan virtuel 26 avec le plan de référence 12, correspondant à la configuration présentée à la figure 4b. Cette fois-ci, il y a un obstacle de faible hauteur tel qu'un butoir de porte. Le capteur d'image 5 produit une image d'une droite discontinue 88 comprenant 3 parties : les deux parties 85 et 86 qui correspondent à l'intersection entre le plan virtuel 26 et le plan de référence 12 et la partie 87 qui correspond à l'intersection du plan virtuel 26 avec l'obstacle. Un moyen d'analyse d'image est apte à déterminer la présence de l'obstacle, le moyen d'analyse étant configuré pour comparer l'image de la droite discontinue 88 avec l'image de référence de la droite 70. Par ailleurs, la distance 90 entre la partie 87 et la partie 85 (respectivement entre la partie 87 et la partie 86) donne une indication de la distance à l'obstacle qui peut alors être obtenue par de simples calculs.

Il s'agit donc d'effectuer une projection d'une ligne sur le plan de référence 12 dans le champ 36 du capteur d'image 5. Le capteur d'image 5 fait donc une acquisition d'une image bidimensionnelle de l'intersection de plans virtuels avec l'obstacle.

Avantageusement, après la prise de vue et détermination de l'obstacle (étape 110), la localisation de l'obstacle est communiquée dans des coordonnées cartésiennes dans le repère contenant les axes X et Y. Cela permet une compression des informations transmises.

Enfin, il est possible de réduire la résolution des images prises par le capteur d'image afin de réduire les coûts du dispositif 10. Il est également possible de gérer tous les émetteurs de faisceaux et les capteurs d'image avec un seul processeur, toujours dans le but de réduire les coûts du dispositif 10.

## Revendications

1. Dispositif de détection (10) d'obstacles destiné à équiper un véhicule mobile (11) parallèlement à un plan de référence (12), le véhicule (11) ayant un sens de déplacement privilégié dans un premier sens selon un axe X comprenant :
• au moins deux émetteurs (14, 16, 19, 32, 34, 35) de faisceau électromagnétique (15, 17, 20, 27, 30, 31) aptes à former deux plans virtuels (22, 23, 24, 26, 28, 29) dans deux directions différentes pouvant s'intersecter entre eux et avec un éventuel obstacle,
**caractérisé en ce qu'**il comprend :
• au moins un capteur d'image (5, 6, 7) apte à produire une image bidimensionnelle de l'intersection des plans virtuels (22, 23, 24, 26, 28, 29) et de l'éventuel obstacle,
• un moyen d'analyse d'image (69) apte à déterminer la présence d'un obstacle, configuré pour comparer l'image bidimensionnelle avec une image de référence,
• un premier émetteur dit oblique (34) d'un premier faisceau oblique (30) s'étendant dans un premier plan virtuel oblique (28) dans le premier sens selon l'axe X et sécant au plan de référence (12),
• un second émetteur dit oblique (35) d'un second faisceau oblique (31) s'étendant dans un second plan virtuel oblique (29) dans le premier sens selon l'axe X et sécant au plan de référence (12),
• un premier capteur d'image (5) apte à produire une image autour de l'intersection des premier et second plans virtuels obliques (28, 29) avec le plan de référence (12),
• un émetteur dit pelle (32) d'un faisceau pelle (27) s'étendant dans un plan virtuel (26) configuré pour s'intersecter avec le plan de référence (12) selon une droite perpendiculaire à l'axe X,
• un moyen d'analyse d'image,
**en ce que** le premier capteur d'image (5) est apte à produire une image de la droite, et **en ce que** le moyen d'analyse d'image est apte à déterminer la présence d'un obstacle par détection d'une déformation de la droite.

2. Dispositif (10) selon la revendication 1, **caractérisé en ce qu'**il comprend un premier émetteur dit horizontal (14) d'un premier faisceau horizontal (15) s'étendant dans un premier plan virtuel (22) sensiblement parallèle au plan de référence (12) et **en ce que** le premier capteur d'image (5) est apte à produire une image de l'intersection du premier plan virtuel (22) et de l'obstacle.

3. Dispositif (10) selon la revendication 2, **caractérisé en ce que** le premier plan virtuel (22) forme un secteur angulaire autour de l'axe X, et **en ce que** le dispositif (10) comprend en outre:
• un deuxième émetteur dit horizontal (16) d'un deuxième faisceau horizontal (17) s'étendant dans un deuxième plan virtuel (23) dans un premier sens, formant un secteur angulaire autour d'un axe Y perpendiculaire à l'axe X et sensiblement parallèle au plan de référence (12),
• un deuxième capteur d'image (6) apte à produire une image de l'intersection du deuxième plan virtuel (23) et de l'obstacle,
• un troisième émetteur dit horizontal (19) d'un troisième faisceau horizontal (20) s'étendant dans un troisième plan virtuel (24) dans un deuxième sens, opposé au premier sens, formant un secteur angulaire autour de l'axe Y et sensiblement parallèle au plan de référence (12),
• un troisième capteur d'image (7) apte à produire une image de l'intersection du troisième plan virtuel (24) et de l'obstacle.

4. Dispositif (10) selon la revendication 3, **caractérisé en ce que** le secteur angulaire (22) formé par le premier faisceau horizontal (15) est espacé des secteurs angulaires (23, 24) formés par les deuxième et troisième faisceaux horizontaux (17, 20) d'un angle prédéfini.

5. Dispositif (10) selon la revendication 4, **caractérisé en ce que** le secteur angulaire est de 120°.

6. Dispositif (10) selon l'une des revendications 2 à 5, **caractérisé en ce qu'**il comprend en outre des moyens de positionnement d'un plan virtuel dit horizontal (22) destinés à positionner ledit plan virtuel dit horizontal (22) de manière à ce qu'il n'intersecte pas le plan de référence (12).

7. Dispositif (10) selon la revendication 6, **caractérisé en ce que** les moyens de positionnement sont constitués par une boucle d'asservissement apte à déterminer une position angulaire (73) du plan virtuel dit horizontal (22) par rapport au plan de référence (12) et à transmettre une nouvelle position angulaire (74) à l'émetteur dit horizontal (14) formant le plan virtuel dit horizontal (22).

8. Dispositif (10) de positionnement selon la revendication 6, **caractérisé en ce que** les moyens de positionnement sont constitués par une orientation de l'émetteur (14) de faisceau (15) de manière à orienter le plan virtuel dit horizontal (22) de façon à former un angle (72) positif entre le plan virtuel dit horizontal (22) et le plan de référence (12).

9. Dispositif (10) selon l'une des revendications 1 à 8, **caractérisé en ce qu'**il comprend des moyens de commande (8) configurés pour désactiver sélectivement des émetteurs (14, 16, 19, 32, 34, 35) et des capteurs (5) en fonction du sens de déplacement du véhicule (11).

10. Dispositif (10) selon l'une des revendications 1 à 9, **caractérisé en ce qu'**il comprend en outre un circuit de traitement (9) configuré pour cadencer les émissions de faisceaux (15, 17, 20, 27, 30, 31) par les émetteurs (14, 16, 19, 32, 34, 35) et synchroniser les émissions de faisceaux (15, 17, 20, 27, 30, 31) avec les prises de vue par les capteurs (5, 6, 7).

11. Dispositif (10) selon l'une des revendications précédentes, **caractérisé en ce que** le ou les faisceaux (15, 17, 20, 27, 30, 31) sont des faisceaux laser.

12. Véhicule (11) **caractérisé en ce qu'**il comprend un dispositif de détection (10) d'un obstacle selon l'une des revendications précédentes.

13. Procédé de détection d'obstacles mettant en œuvre un dispositif (10) selon l'une des revendications 1 à 11, **caractérisé en ce qu'**il comporte les étapes suivantes :
• émission d'un faisceau (15, 17, 20, 27, 30, 31) apte à former un plan virtuel (22, 23, 24, 26, 28, 29) pouvant s'intersecter avec l'obstacle,
• prise de vues et production d'une image de l'intersection du plan virtuel (22, 23, 24, 26, 28, 29) et de l'obstacle,
• analyse de l'image et détermination de l'obstacle.

14. Procédé de détection selon la revendication précédente, **caractérisé en ce qu'**il comporte en outre les étapes suivantes :
• mémorisation d'une première image de l'intersection du plan virtuel (26) formé par le faisceau pelle (27) avec le plan de référence (12),
• mémorisation d'une seconde image de l'intersection du plan virtuel (26) formé par le faisceau pelle (27) avec l'obstacle,
• comparaison de la première et la seconde images de manière à définir la localisation de l'obstacle.

## Patentansprüche

1. Vorrichtung zum Erkennen (10) von Hindernissen, bestimmt zum Installieren in einem mobilen Fahrzeug (11) parallel zu einer Referenzebene (12), wobei das Fahrzeug (11) eine bevorzugte Bewegungsrichtung in einer ersten Richtung entlang einer X-Achse hat, die Folgendes umfasst:
• wenigstens zwei Sender (14, 16, 19, 32, 34, 35) für elektromagnetische Strahlen (15, 17, 20, 27, 30, 31), die zwei virtuelle Ebenen (22, 23, 24, 26, 28, 29) in zwei unterschiedlichen Richtungen bilden können, die sich und ein eventuelles Hindernis schneiden können,
**dadurch gekennzeichnet, dass** sie Folgendes umfasst:
• wenigstens einen Bildsensor (5, 6, 7), der ein zweidimensionales Bild des Schnittpunkts der virtuellen Ebenen (22, 23, 24, 26, 28, 29) und des eventuellen Hindernisses produzieren kann,
• ein Bildanalysemittel (69), das die Anwesenheit eines Hindernisses bestimmen kann, konfiguriert zum Vergleichen des zweidimensionalen Bildes mit einem Referenzbild,
• einen ersten, schräg genannten Sender (34) für einen ersten schrägen Strahl (30), der sich in einer ersten schrägen virtuellen Ebene (28) in der ersten Richtung entlang der X-Achse erstreckt und die Referenzebene (12) schneidet,
• einen zweiten schräg genannten Sender (35) für einen zweiten schrägen Strahl (31), der sich in einer zweiten schrägen virtuellen Ebene (29) in der ersten Richtung entlang der X-Achse erstreckt und die Referenzebene (12) schneidet,
• einen ersten Bildsensor (5), der ein Bild um den Schnittpunkt der ersten und zweiten schrägen virtuellen Ebene (28, 29) mit der Referenzebene (12) produzieren kann,
• einen Schaufel genannten Sender (32) für einen Schaufelstrahl (27), der sich in einer virtuellen Ebene (26) erstreckt, konfiguriert zum Schneiden mit der Referenzebene (12) entlang einer Geraden lotrecht zur X-Achse,
• ein Bildanalysemittel,
dadurch, dass der erste Bildsensor (5) ein Bild der Geraden erzeugen kann, und dadurch, dass das Bildanalysemittel die Anwesenheit eines Hindernisses durch Erkennen einer Verformung der Geraden bestimmen kann.

2. Vorrichtung (10) nach Anspruch 1, **dadurch gekennzeichnet, dass** sie einen ersten, horizontal genannten Sender (14) für einen ersten horizontalen Strahl (15) umfasst, der sich in einer ersten virtuellen Ebene (22) im Wesentlichen parallel zur Referenzebene (12) erstreckt, und dadurch, dass der erste Bildsensor (5) ein Bild des Schnittpunkts der ersten virtuellen Ebene (22) und des Hindernisses produzieren kann.

3. Vorrichtung (10) nach Anspruch 2, **dadurch gekennzeichnet, dass** die erste virtuelle Ebene (22) einen Winkelsektor um die X-Achse bildet, und dadurch, dass die Vorrichtung (10) ferner Folgendes umfasst:
• einen zweiten, horizontal genannten Sender (16) für einen zweiten horizontalen Strahl (17), der sich in einer zweiten virtuellen Ebene (23) in einer ersten Richtung erstreckt, indem er einen Winkelsektor um eine Y-Achse lotrecht zur X-Achse und im Wesentlichen parallel zur Referenzebene (12) bildet,
• einen zweiten Bildsensor (6), der ein Bild des Schnittpunkts der zweiten virtuellen Ebene (23) und des Hindernisses produzieren kann,
• einen dritten, horizontal genannten Sender (19) für einen dritten horizontalen Strahl (20), der sich in einer dritten virtuellen Ebene (24) in einer zweiten Richtung, entgegengesetzt zur ersten Richtung, erstreckt, indem er einen Winkelsektor um die Y-Achse und im Wesentlichen parallel zur Referenzebene (12) bildet,
• einen dritten Bildsensor (7), der ein Bild des Schnittpunkts der dritten virtuellen Ebene (24) und des Hindernisses produzieren kann.

4. Vorrichtung (10) nach Anspruch 3, **dadurch gekennzeichnet, dass** der durch den ersten horizontalen Strahl (15) gebildete Winkelsektor (22) von den durch den zweiten und dritten horizontalen Strahl (17, 20) gebildeten Winkelsektoren (23, 24) um einen vordefinierten Winkel beabstandet ist.

5. Vorrichtung (10) nach Anspruch 4, **dadurch gekennzeichnet, dass** der Winkelsektor 120° beträgt.

6. Vorrichtung (10) nach einem der Ansprüche 2 bis 5, **dadurch gekennzeichnet, dass** sie ferner Mittel zum Positionieren einer horizontal genannten virtuellen Ebene (22) umfasst, die zum Positionieren der horizontal genannten virtuellen Ebene (22) bestimmt sind, so dass sie die Referenzebene (12) nicht schneidet.

7. Vorrichtung (10) nach Anspruch 6, **dadurch gekennzeichnet, dass** die Positionierungsmittel durch eine Servoschleife gebildet werden, die eine Winkelposition (73) der horizontal genannten virtuellen Ebene (22) in Bezug auf die Referenzebene (12) bestimmen und eine neue Winkelposition (74) zum horizontal genannten Sender (14) übertragen kann, der die horizontal genannte virtuelle Ebene (22) bildet.

8. Vorrichtung (10) zum Positionieren nach Anspruch 6, **dadurch gekennzeichnet, dass** die Positionierungsmittel durch eine Orientierung des Senders (14) des Strahls(15) gebildet werden, um die horizontal genannte virtuelle Ebene (22) so zu orientieren, dass sie einen positiven Winkel (72) zwischen der horizontal genannten virtuellen Ebene (22) und der Referenzebene (12) bildet.

9. Vorrichtung (10) nach einem der Ansprüche 1 bis 8, **dadurch gekennzeichnet, dass** sie Steuermittel (8) umfasst, die zum selektiven Deaktivieren der Sender (14, 16, 19, 32, 34, 35) und der Sensoren (5) in Abhängigkeit von der Bewegungsrichtung des Fahrzeugs (11) konfiguriert sind.

10. Vorrichtung (10) nach einem der Ansprüche 1 bis 9, **dadurch gekennzeichnet, dass** sie ferner eine Verarbeitungsschaltung (9) umfasst, die zum Takten der Strahlensendungen (15, 17, 20, 27, 30, 31) durch die Sender (14, 16, 19, 32, 34, 35) und zum Synchronisieren der Strahlensendungen (15, 17, 20, 27, 30, 31) mit den Bildaufnahmen durch die Sensoren (5, 6, 7) konfiguriert ist.

11. Vorrichtung (10) nach einem der vorherigen Ansprüche, **dadurch gekennzeichnet, dass** der oder die Strahlen (15, 17, 20, 27, 30, 31) Laserstrahlen sind.

12. Fahrzeug (11), **dadurch gekennzeichnet, dass** es eine Vorrichtung (10) zum Erkennen eines Hindernisses nach einem der vorherigen Ansprüche umfasst.

13. Verfahren zum Erkennen von Hindernissen unter Verwendung einer Vorrichtung (10) nach einem der Ansprüche 1 bis 11, **dadurch gekennzeichnet, dass** es die folgenden Schritte beinhaltet:
• Senden eines Strahls (15, 17, 20, 27, 30, 31), der eine virtuelle Ebene (22, 23, 24,
26, 28, 29) bilden kann, die das Hindernis schneiden kann,
• Aufnehmen von Bildern und Produzieren eines Bildes des Schnittpunkts der virtuellen Ebene (22, 23, 24, 26, 28, 29) und des Hindernisses,
• Analysieren des Bildes und Bestimmen des Hindernisses.

14. Erkennungsverfahren nach dem vorherigen Anspruch, **dadurch gekennzeichnet, dass** es ferner die folgenden Schritte beinhaltet:
• Speichern eines ersten Bildes des Schnittpunkts der virtuellen Ebene (26), die von dem Schaufelstrahl (27) mit der Referenzebene (12) gebildet wird,
• Speichern eines zweiten Bildes des Schnittpunkts der virtuellen Ebene (26), die von dem Schaufelstrahl (27) mit dem Hindernis gebildet wird,
• Vergleichen des ersten und zweiten Bildes, um den Ort des Hindernisses zu definieren.

## Claims

1. An obstacle detection device (10) which is intended to be fitted to a mobile vehicle (11) able to move parallel to a reference plane (12), the vehicle (11) having a favored direction of travel in a first direction along an axis X, comprising:
• at least two emitters (14, 16, 19, 32, 34, 35) of electromagnetic beams (15, 17, 20, 27, 30, 31) which are able to form two virtual planes (22, 23, 24, 26, 28, 29) in two different directions that are able to intersect one another and intersect a potential obstacle,
**characterized in that** it comprises:
• at least one image sensor (5, 6, 7) able to produce a two-dimensional image of the intersection of the virtual planes (22, 23, 24, 26, 28, 29) and of the potential obstacle,
• an image analysis means (69) able to determine the presence of an obstacle, configured to compare the two-dimensional image with a reference image,
• a first emitter referred to as an oblique emitter (34) of a first oblique beam (30) extending in a first oblique virtual plane (28) in the first direction along the axis X and secant with the reference plane (12),
• a second emitter referred to as an oblique emitter (35) of a second oblique beam (31) extending in a second oblique virtual plane (29) in the first direction along the axis X and secant with the reference plane (12),
• a first image sensor (5) able to produce an image around the intersection of the first and second oblique virtual planes (28, 29) with the reference plane (12),
• an emitter referred to as a shovel emitter (32) of a shovel beam (27) extending in a virtual plane (26) configured to intersect with the reference plane (12) along a straight line perpendicular to the axis X,
• an image analysis means,
**in that** the first image sensor (5) is able to produce an image of the straight line, and **in that** the image analysis means is able to determine the presence of an obstacle by detecting a deformation of the straight line.

2. The device (10) as claimed in claim 1, **characterized in that** it comprises a first emitter referred to as a horizontal emitter (14) of a first horizontal beam (15) extending in a first virtual plane (22) substantially parallel to the reference plane (12), and **in that** the first image sensor (5) is able to produce an image of the intersection of the first virtual plane (22) and of the obstacle.

3. The device (10) as claimed in claim 2, **characterized in that** the first virtual plane (22) forms an angular sector about the axis X and **in that** the device (10) further comprises:
• a second emitter referred to as a horizontal emitter (16) of a second horizontal beam (17) extending in a second virtual plane (23) in a first direction, forming an angular sector about an axis Y perpendicular to the axis X and substantially parallel to the reference plane (12),
• a second image sensor (6) able to produce an image of the intersection of the second virtual plane (23) and of the obstacle,
• a third emitter referred to as a horizontal emitter (19) of a third horizontal beam (20) extending in a third virtual plane (24) in a second direction, the opposite of the first direction, forming an angular sector about the axis Y and substantially parallel to the reference plane (12),
• a third image sensor (7) able to produce an image of the intersection of the third virtual plane (24) and of the obstacle.

4. The device (10) as claimed in claim 3, **characterized in that** the angular sector (22) formed by the first horizontal beam (15) is spaced away from the angular sectors (23, 24) formed by the second and third horizontal beams (17, 20) by a predefined angle.

5. The device (10) as claimed in claim 4, **characterized in that** the angular sector is 120°.

6. The device (10) as claimed in one of claims 2 to 5, **characterized in that** it further comprises positioning means for positioning a virtual plane referred to as a horizontal plane (22) which are intended to position said virtual plane referred to as a horizontal plane (22) in such a way that it does not intersect the reference plane (12).

7. The device (10) as claimed in claim 6, **characterized in that** the positioning means consist of a control loop able to determine an angular position (73) of the virtual plane referred to as a horizontal plane (22) with respect to the reference plane (12), and to transmit a new angular position (74) to the emitter referred to as a horizontal emitter (14) that forms the virtual plane referred to as a horizontal plane (22).

8. The positioning device (10) as claimed in claim 6, **characterized in that** the positioning means consist of an orientation of the emitter (14) of the beam (15) in such a way as to orient the virtual plane referred to as a horizontal plane (22) in such a way as to form a positive angle (72) between the virtual plane referred to as a horizontal plane (22) and the reference plane (12).

9. The device (10) as claimed in one of claims 1 to 8, **characterized in that** it comprises control means (8) configured to selectively deactivate emitters (14, 16, 19, 32, 34, 35) and sensors (5) according to the direction of travel of the vehicle (11).

10. The device (10) as claimed in one of claims 1 to 9, **characterized in that** it further comprises a processing circuit (9) configured to sequence the emissions of the beams (15, 17, 20, 27, 30, 31) by the emitters (14, 16, 19, 32, 34, 35) and to synchronize the emissions of the beams (15, 17, 20, 27, 30, 31) with the image captures by the sensors (5, 6, 7).

11. The device (10) as claimed in one of the preceding claims, **characterized in that** the beam or beams (15, 17, 20, 27, 30, 31) are laser beams.

12. A vehicle (11), **characterized in that** it comprises an obstacle detection device (10) as claimed in one of the preceding claims.

13. An obstacle detection method employing a device (10) as claimed in one of claims 1 to 11, **characterized in that** it involves the following steps:
• emission of a beam (15, 17, 20, 27, 30, 31) able to form a virtual plane (22, 23, 24, 26, 28, 29) that may intersect with the obstacle,
• image capture and production of an image of the intersection of the virtual plane (22, 23, 24, 26, 28, 29) and of the obstacle,
• image analysis and determination of the obstacle.

14. The detection method as claimed in the preceding claim, **characterized in that** it further involves the following steps:
• memory storage of a first image of the intersection of the virtual plane (26) formed by the shovel beam (27) with the reference plane (12),
• memory storage of a second image of the intersection of the virtual plane (26) formed by the shovel beam (27) with the obstacle,
• comparison of the first and second images so as to define the location of the obstacle.
